# EUROPEAN PATENT APPLICATION

(11) **EP 4 651 553 A1**
(43) Date of publication of application: **19.11.2025**
(21) Application number: 25175590.6
(22) Date of filing: 12.05.2025
(51) Int. Cl.: H04W 24/10, H04W 48/12, H04W 88/06

(54) **MEASUREMENT OFFLOADING**

(30) Priority: 13.05.2024 IN 202441037578
(71) Applicant: Nokia Technologies Oy, 02610 Espoo (FI)
(72) Inventor: KAINULAINEN, Jani-Pekka, Cottenham (GB); DALSGAARD, Lars, Oulu (FI); REDDY, A Phanikumar, Bengaluru (IN); KAPURUHAMY BADALGE, Shashika Manosha, Oulu (FI); KOSKINEN, Jussi-Pekka, Oulu (FI)
(74) Representative: Nokia EPO representatives

(57) **Abstract**

Embodiments of the present disclosure relate to a solution for measurement offloading. In one aspect, the terminal device stores system information comprising at least one condition for applying measurement offloading from a first type of radio to a second type of radio. Based on the system information, the terminal device evaluates, based on at least one measurement performed in a first state, whether the at least one condition is satisfied. Based on determining that the at least one condition is satisfied, the terminal device applies the measurement offloading based on a state transition from the first state to a second state. Therefore, the power consumption of the terminal device is reduced.

## Description

### FIELD

Various example embodiments relate to the field of communication and in particular, to devices, methods, apparatuses and a computer readable storage medium for measurement offloading.

### BACKGROUND

A communication network can be seen as a facility that enables communications between two or more communication devices, or provides communication devices access to a data network. A mobile or wireless communication network is one example of a communication network.

Such communication networks operate in accordance with standards, such as those promulgated by Third Generation Partnership Project (3GPP) or European Telecommunications Standards Institute (ETSI). Examples of such standards include the so-called 5th generation (5G) standard or other standards promulgated by 3GPP.

### SUMMARY

In general, example embodiments of the present disclosure provide a solution for measurement offloading, for example, fast measurement offloading.

In a first aspect, there is provided a terminal device. The terminal device comprises at least one processor; and at least one memory storing instructions that, when executed by the at least one processor, cause the terminal device at least to: store system information comprising at least one condition for applying measurement offloading from a first type of radio to a second type of radio; based on the system information and based on at least one measurement performed in a first state, evaluate, whether the at least one condition is satisfied; and based on determining that the at least one condition is satisfied, apply the measurement offloading based on a state transition from the first state to a second state.

In a second aspect, there is provided a method at a terminal device. The method comprises storing system information comprising at least one condition for applying measurement offloading from a first type of radio to a second type of radio; based on the system information, evaluating, based on at least one measurement performed in a first state, whether the at least one condition is satisfied; and based on determining that the at least one condition is satisfied, applying the measurement offloading based on a state transition from the first state to a second state.

In a third aspect, there is provided an apparatus of terminal device. The apparatus comprises means for storing system information comprising at least one condition for applying measurement offloading from a first type of radio to a second type of radio; means for based on the system information, evaluate, based on at least one measurement performed in a first state, whether the at least one condition is satisfied; and means for based on determining that the at least one condition is satisfied, apply the measurement offloading based on a state transition from the first state to a second state.

In a fourth aspect, there is provided a non-transitory computer readable medium comprising program instructions for causing an apparatus to perform at least the method according to the third aspect.

In a fifth aspect, there is provided a computer program comprising instructions, which, when executed by an apparatus, cause the apparatus at least to perform at least the method according to the third aspect.

In a sixth aspect, there is provided a terminal device. The terminal device comprises storing circuitry configured to store system information comprising at least one condition for applying measurement offloading from a first type of radio to a second type of radio; evaluating circuitry configured to based on the system information, evaluate whether the at least one condition is satisfied based on at least one measurement performed in a first state; and applying circuitry configured to based on determining that the at least one condition is satisfied, apply the measurement offloading based on a state transition from the first state to a second state.

It is to be understood that the summary section is not intended to identify key or essential features of embodiments of the present disclosure, nor is it intended to be used to limit the scope of the present disclosure. Other features of example embodiments of the present disclosure will become easily comprehensible through the following description.

### BRIEF DESCRIPTION OF THE DRAWINGS

Some example embodiments will now be described with reference to the accompanying drawings, in which:
Fig. 1A illustrates an example network environment in which example embodiments of the present disclosure may be implemented;
Fig. 1B illustrates an example of UE operations with a LP-WUR associated with aspects of the present disclosure;
Fig. 2 illustrates an example signaling chart illustrating an example process according to some embodiments of the present disclosure;
Fig. 3 illustrates a flowchart of an example method implemented at a terminal device according to some example embodiments of the present disclosure;
Fig. 4 illustrates an example procedure of proposed solution according to some embodiments of the present disclosure;
Fig. 5 illustrates a flowchart of a method implemented at a terminal device according to some embodiments of the present disclosure;
Fig. 6 illustrates a flowchart of a method implemented at a network device according to some embodiments of the present disclosure;
Fig. 7 illustrates a simplified block diagram of an apparatus that is suitable for implementing embodiments of the present disclosure; and
Fig. 8 illustrates a block diagram of an example computer readable medium in accordance with some embodiments of the present disclosure.
Throughout the drawings, the same or similar reference numerals represent the same or similar element.

### DETAILED DESCRIPTION

Principles of the present disclosure will now be described with reference to some example embodiments. It is to be understood that these embodiments are described only for the purpose of illustration and help those skilled in the art to understand and implement example embodiments of the present disclosure, without suggesting any limitation as to the scope of the disclosure. The example embodiments of the present disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one embodiment," "an embodiment," "an example embodiment," and the like indicate that the embodiment described may include a particular feature, structure, or characteristic, but it is not necessary that every embodiment includes the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the listed terms.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/or combinations thereof. As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, the term "communication network" refers to a network following any suitable communication standards, such as long term evolution (LTE), LTE-advanced (LTE-A), wideband code division multiple access (WCDMA), high-speed packet access (HSPA), narrow band internet of things (NB-IoT) and so on. Furthermore, the communications between a terminal device and a network device in the communication network may be performed according to any suitable generation communication protocols, including, but not limited to, the first generation (1G), the second generation (2G), 2.5G, 2.75G, the third generation (3G), the fourth generation (4G), 4.5G, the future fifth generation (5G) communication protocols, and/or any other protocols either currently known or to be developed in the future. Embodiments of the present disclosure may be applied in various communication systems. Given the rapid development in communications, there will of course also be future type communication technologies and systems with which example embodiments of the present disclosure may be embodied. It should not be seen as limiting the scope of the present disclosure to only the aforementioned system.

As used herein, the term "network device" refers to a node in a communication network via which a terminal device accesses the network and receives services therefrom. The network device may refer to a base station (BS) or an access point (AP), for example, a node B (NodeB or NB), an evolved NodeB (eNodeB or eNB), a new radio (NR) NB (also referred to as a gNB), a remote radio unit (RRU), a radio header (RH), a remote radio head (RRH), a relay, a low power node such as a femto, a pico, and so forth, depending on the applied terminology and technology.

The term "terminal device" refers to any end device that may be capable of wireless communication. By way of example rather than limitation, a terminal device may also be referred to as a communication device, user equipment (UE), a subscriber station (SS), a portable subscriber station, a mobile station (MS), or an access terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), an internet of things (loT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. In the following description, the terms "terminal device", "communication device", "terminal", "user equipment" and "UE" may be used interchangeably.

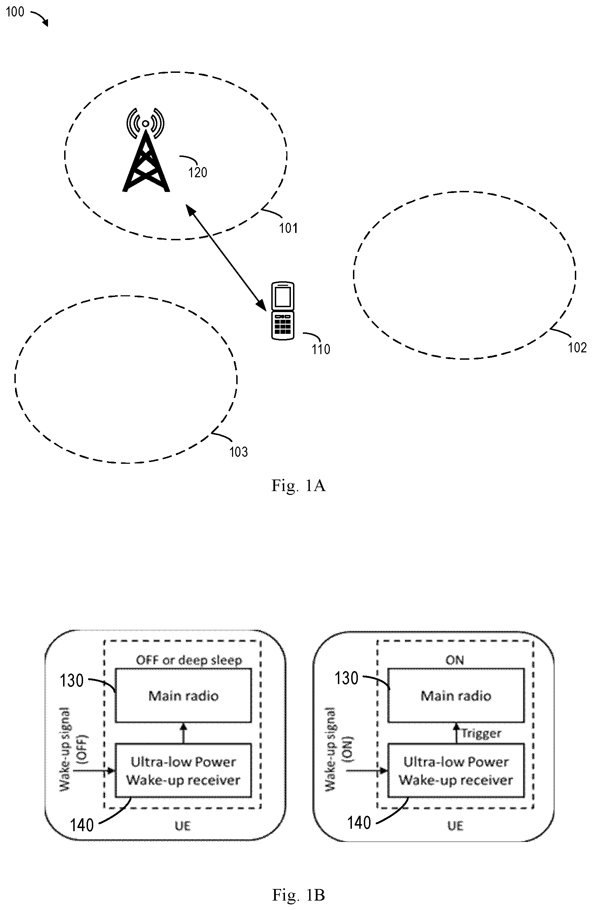

Fig. 1A illustrates an example network environment 100 in which example embodiments of the present disclosure may be implemented. The environment 100, which may be a part of a communication network, comprises terminal devices and network devices.

As illustrated in Fig. 1A, the communication network 100 may comprise a terminal device 110 (hereinafter may also be referred to as user equipment 110 or a UE 110). The communication network 100 may further comprise a network device 120. The network device 120 can manage a cell 101. The terminal device 110 and the network device 120 can communicate with each other in the coverage of the cell 101 (i.e., serving cell). The communication network 100 may further comprise some neighbouring cells, such as neighbouring cell 102, 103. The number of neighbouring cells is only for the purpose of illustration without suggesting any limitations. A link from the terminal device 110 to the network device 120 is referred to as an uplink (UL), while a link from the network device 120 to the terminal device 110 is referred to as a downlink (DL).

It is to be understood that the number of devices is only for the purpose of illustration without suggesting any limitations. The system 100 may include any suitable number of terminal devices or network devices adapted for implementing embodiments of the present disclosure. Although not shown, it would be appreciated that one or more terminal devices or network devices may be located in the environment 100.

Communications in the communication system 100 may be implemented according to any proper communication protocol(s), comprising, but not limited to, cellular communication protocols of the first generation (1G), the second generation (2G), the third generation (3G), the fourth generation (4G) and the fifth generation (5G) and on the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: code division multiple access (CDMA), frequency division multiple access (FDMA), time division multiple access (TDMA), frequency division duplex (FDD), time division duplex (TDD), multiple-input multiple-output (MIMO), orthogonal frequency division multiple (OFDM), discrete Fourier transform spread OFDM (DFT-s-OFDM) and/or any other technologies currently known or to be developed in the future.

For Release-18, low-power wake-up signal (WUS) and receiver (WUR) for NR has been agreed. The usage of an additional LP-WUR (LR) at the UE is evaluated to reduce the overall UE power consumption. A main radio/receiver (MR) of the UE may be put into a sleep mode (or even powered off) for power saving when not being needed for any processing (e.g. traffic/measurements). Upon the reception by the LP-WUR of a newly defined WUS, then the MR may be easily woken up when required by the network. Basically, the network triggers the UE to wake-up MR by transmitting a special WUS to the UE when needed in an event-driven manner. The WUS is monitored by the dedicated LP-WUR at the UE. When a UE receives the WUS, the LP-WUR may trigger the wake-up of the ordinary MR transceiver and communications can be start. In another words, the ultra-low power receiver wakes up the MR, otherwise, the state of the MR can be off or kept in a deep sleep mode.

Fig. 1B illustrates an example of UE operations with a LP-WUR associated with aspects of the present disclosure. As shown in Fig. 1B, the UE may comprise the main radio 130 and the ultra-low power wake up receiver 140 (i.e., the LP-WUR). If the ultra-low power wake up receiver 140 is in "OFF" state, the ultra-low power wake up receiver 140 cannot be activated by the wake-up signal, and the main radio 130 is in "OFF" state or deep sleep mode. If the ultra-low power wake up receiver 140 is in "ON" state, the ultra-low power wake up receiver 140 can be activated by the wake-up signal, and the main radio 130 can be activated by the ultra-low power wake up receiver 140 and transit to "ON" state.

The assumption is that the LP-WUR can be operated in an always "ON" manner with very low power consumption. By designing a simple signal (e.g., WUS) and the use of dedicated hardware for its monitoring, it is expected that the LP-WUR will consume significantly less power compared to the NR transceiver, and the LP-WUR is able to receive the WUS.

The MR power consumption depends on the configured length of wake-up periods, e.g., a paging cycle. To meet battery life requirements, long extended discontinuous reception (eDRX) cycle may be used, which results in high latency. Therefore, eDRX is not suitable for such services with requirements of both long battery life and low latency. For example, in fire detection and extinguishment use case, fire shutters shall be closed and fire sprinklers shall be turned on by the actuators within 1 to 2 seconds from the time of the fire is detected by sensors, and long eDRX cycle cannot meet the delay requirements. Therefore, eDRX is apparently not suitable for latency-critical use cases.

The Rel-18 study item for "study on low-power wake up signal and receiver for NR" includes investigations to the followings:
- The low-power wake-up signal and receiver, including power saving benefit, coverage, system overhead impact, network energy impact and other related aspects.
- The receiver architecture for low-power wake-up receiver and provide analysis for power consumption, noise figure and etc.
- L1 design and procedure changes needed to support the low-power wake-up signal and evaluations for the link performances.
- Higher layer protocol changes needed to support the low-power wake-up signals.
- Related RAN4 impacts.

In order to achieve the UE power saving gain by the LP-WUS and/or the LP-WUR, the radio resource management (RRM) measurement on a serving cell and neighboring cells via the MR of the UE is relaxed or may be stopped when the UE is using the LP-WUS or the MR is in ultra-deep sleep.

For Release-19, to properly define and specify a WUS and support the operation of UEs with the LP-WUR, a work item was approved with the following objectives.
- For IDLE/INACTIVE modes, specify procedure and configuration of LP-WUS indicating paging monitoring triggered by LP-WUS, including at least configuration, sub-grouping and entry/exit condition for LP-WUS monitoring (RAN2, RAN1, RAN3, RAN4); specify further RRM relaxation of UE MR for both serving and neighbor cell measurements, and UE serving cell RRM measurement offloaded from MR to LP-WUR, including the necessary conditions (RAN4, RAN2).
- Study and if necessary specify or support by declaration, the corresponding BS requirements, e.g., dynamic range for LP-WUS/LP-SS.
   ▪ Current NR BS requirements is baseline;
   ▪ Specify necessary RRM requirements.

The following agreement was reached: measurement requirements for LP-WUR serving cell measurement based on existing PSS/SSS at Idle/Inactive state.

However, the procedures for LP-WUR measurements and activation was not involved. The focus of LP-WUR based measurement requirements are the idle mode and the inactive mode, and the connected mode is not in focus.

For idle mode, it is expected that the measurement configuration of the LP-WUR at least can be provided in the system information. According to 38.331, the UE in RRC_IDLE and RRC_INACTIVE should ensure having a valid version of (at least) the MIB, SIB 1 through SIB4, SIB5 (if the UE supports E-UTRA), SIB 11 (if the UE is configured for IDLE/INACTIVE measurements), SIB12 (if UE is capable of NR sidelink communication and is configured by upper layers to receive or transmit NR sidelink communication), and SIB 13, SIB 14 (if UE is capable of V2X sidelink communication and is configured by upper layers to receive or transmit V2X sidelink communication).

The UE may store certain system information for a limited amount of time. However, some or all of the system information may have to re-obtained. The LP-WUS related configuration for IDLE/INACTIVE state is provided via system information. FFS if dedicated configuration is needed. It is assumed that the LP-WUS configuration in SIB at least includes the following information: LP-SS configuration, LP-WUS configuration, FFS on Entry/exit condition for LP-WUS monitoring.

Once the UE enters idle mode, the UE is required to read some or all of the system information if the UE does not have valid system information stored, and acquire any LP-WUR/WUS information and necessary configuration. This process takes time in idle mode, and the UE needs to use the MR while receiving the necessary system information. In addition, an evaluation of LP-WUS monitoring entry condition may take time.

The UE behavior regarding the use of offloading of measurement to LP-WUR during this period has not been discussed and agreed. The UE performs idle / inactive mode measurements using MR or LP-WUR during this acquisition time and LP-WUS monitoring entry condition evaluation time. To facilitate and maximize the benefits from the MR activity offloading to the LP-WUR for UE power savings, it is beneficial to allow UE fast offloading by defining efficient offloading evaluations conditions.

According to some embodiments of the present disclosure, a solution is provided for the measurement offloading. In one aspect of this solution, based on a state transition from a first state to a second state, a terminal device evaluates, based on at least one measurement performed in the first state, whether at least one condition for applying measurement offloading from a first type of radio to a second type of radio is satisfied. Based on determining that the at least one condition is satisfied, the terminal device applies the measurement offloading based on entering the second state.

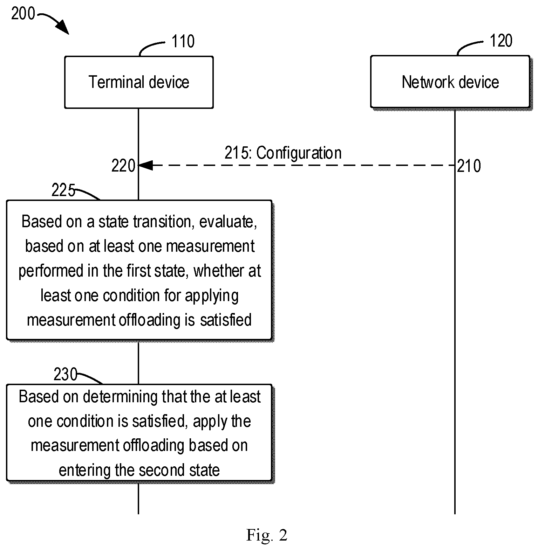

In another aspect of this solution, the terminal device stores system information comprising at least one condition for applying measurement offloading from a first type of radio to a second type of radio. Based on the system information, the terminal device evaluates, based on at least one measurement performed in a first state, whether the at least one condition is satisfied. Based on determining that the at least one condition is satisfied, the terminal device applies the measurement offloading based on a state transition from the first state to a second state. Therefore, the power consumption of the terminal device is reduced. Principles and implementations of embodiments of the present disclosure will be described in detail below with reference to Figs. 2-8.

Fig. 2 illustrates a signaling chart illustrating an example process 200 according to some embodiments of the present disclosure. For the purpose of discussion, the process 200 will be described with reference to Fig. 1A. The process 200 may involve the terminal device 110 and the network device 120. It would be appreciated that although the process 200 has been described in the communication environment 100 of Fig. 1A, this process may be likewise applied to other communication scenarios with similar issues.

In the process 200, the network device 120 transmits 210 a configuration 215 to the terminal device 110. The configuration 215 comprises at least one condition for applying measurement offloading from a first type of radio to a second type of radio based on a state transition from a first state to a second state. On the other side of the communication, the terminal device 110 may receive 220 the configuration 215 from the network device 120.

In some embodiments, the first type of radio may comprise a MR, and the second type of radio may comprise a LP-WUR. In some embodiments, the first type of radio may comprise a LP-WUR, and the second type of radio may comprise a MR. In other words, the MR may offload measurements to the LP-WUR, and the LP-WUR may also offload measurements to the MR.

Alternatively or additionally, the configuration 215 may be transmitted via system information, an RRC message, or a combination of the above-mentioned items. For example, the RRC message may be an RRC setup message, an RRC reconfiguration message, an RRC release message, an RRC resume message.

In an example, the configuration 215 may be a serving cell measurement configuration in connected mode. In another example, the configuration 215 may be a RRCRelease configuration. In yet another example, the configuration 215 may be a SIB-based configuration. In a further example, the configuration 215 may be a RRCSetup configuration. In a further example, the configuration 215 may be a RRCResume configuration.

In some embodiments, the network device 120 may transmit the configuration 215 to the terminal device 110 in the first state or the second state. In an example, the network device 120 may transmit the configuration 215 to the terminal device 110 in the first state via the system information, the RRC message, or a combination of the above-mentioned items. In another example, the network device 120 may transmit the configuration 215 to the terminal device 110 in the second state via the RRC setup message, the RRC resume message, or a combination of above two items.

In some embodiments, the first state may comprise a connected state (hereinafter may also be referred to as connected mode), and the second state may comprise one of an idle state or an inactive state(hereinafter may also be referred to as idle mode or inactive mode). For example, the MR may offload measurements to the LP-WUR when the terminal device 110 transitioning from a connected state to an idle state or an inactive state. Alternatively, the first state may comprise one of an idle state or an inactive state, and the second state may comprise a connected state. For example, the LP-WUR may offload measurements to MR the when the terminal device 110 transitioning from an idle state or an inactive state to a connected state.

In some embodiments, the at least one condition may be predefined. In some embodiments, the at least one condition may be indicated in broadcasted system information stored by the terminal device. In some embodiments, the at least one condition may be indicated in the configuration 215 received via an RRC message. For example, the at least one condition may be indicated in the configuration 215 received via an RRC setup message, an RRC reconfiguration message, an RRC release message, an RRC resume message, or any combination of two or more of the above-mentioned items.

Continuing with reference to Fig. 2, based on a state transition from a first state to a second state, the terminal device 110 evaluates 225, based on at least one measurement performed in the first state, whether at least one condition for applying measurement offloading from a first type of radio to a second type of radio is satisfied.

In an example, the terminal device 110 may evaluate LP-WUR offloading conditions (i.e., the at least one condition) based on information from the serving cell measurements (i.e., at least one measurement performed in the first state), such as PSS/SSS based LP-WUR. In addition, based on the serving cell measurement, the terminal device 110 may also activate the LP-WUR if the conditions associated with the LP-WUR activation are met. The terminal device 110 may compare the serving cell measurements performed on MR with pre-defined relaxation condition (e.g. signal-to-noise ratio, SNR, point). If the measurement results meet the criteria associated with the pre-defined relaxation condition, the terminal device 110 may be allowed to offload the serving cell measurements to the LP-WUR.

Alternatively or additionally, the at least one measurement may be performed by the first type of radio. For example, the MR may perform the measurements in the connected mode. Alternatively or additionally, the at least one measurement may be performed by the second type of radio. For example, the LP-WUR may perform the measurements in the connected mode.

In addition, the at least one measurement may be performed based on at least one of a PSS or an SSS. For example, the measurement results may be based on PSS/SSS. Alternatively or additionally, the at least one measurement may be performed based on a LP-SS. For example, the measurement results may be based on LP-SS.

In some embodiments, in order to evaluate whether the at least one condition is satisfied, the terminal device 110 may compare at least one value of the at least one measurement with one or more thresholds associated with the at least one condition. Alternatively or additionally, the one or more thresholds are the same. Alternatively, the one or more thresholds are different.

For instance, if the terminal device 110 receives the configuration 215 from the network device 120, and the configuration 215 is a dedicated configuration. The dedicated configuration includes the conditions that the terminal device 110 is allowed to offload the measurements. The terminal device 110 compares the serving cell measurements (conducted either by MR or LP-WUR) performed in the connected mode to the thresholds provided in the dedicated configuration. These thresholds could be different or equal, which could be defined based on RAN1 & RAN4 requirements. In an example, the dedicated configuration may be RRCReconfiguration message during connected mode. In another example, the configuration may be dedicated configuration provided in the RRCRelease message.

In some embodiments, the terminal device 110 may determine whether the at least one condition is satisfied upon transitioning from a connected mode to an idle or inactive mode or transitioning from an idle or inactive mode to a connected mode.

Continuing with reference to Fig. 2, based on determining that the at least one condition is satisfied, the terminal device 110 applies 230 the measurement offloading based on entering the second state. In some example, the result of the activation for LP-WUR offloading is that the terminal device 110 offloads the MR measurements to LP-WUR and the MR relaxations applies once the terminal device 110 enters idle / inactive mode. In other words, the result of this is that the terminal device 110 "turns off" some or all of the MR measurements (the relaxations specified in LP-WUR requirements is applied).

For example, the terminal device 110 may be allowed to enable LP-WUR based on serving cell measurements and an evaluation using measurement performed in connected mode. The conditions may be met already earlier but the actual MR offloading occurs from RRCConnectionRelease message or a corresponding signal transferring UE to idle/inactive mode.

There are dedicated configuration in RRC Release message, or without dedicated configuration. For the case of dedicated configuration, the terminal device 110 may read the dedicated configuration, decode it and perform evaluation based on what is contained in the release message. The terminal device 110 may compare the serving cell measurements performed in the connected mode to the entry threshold provided in a dedicated RRCRelease configuration. If serving cell measurements or neighbouring cell measurements of the connected mode meet the threshold, the UE may be allowed to offload starting from the RRCRelease message, e.g., after the time that the terminal device 110 has processed the RRCRelease configuration and performed the evaluation.

For the case of without dedicated configuration, the terminal device 110 may acquire the information about conditions previously, and may directly evaluate the MR offloading condition at the time of receiving RRCConnectionRelease message. The terminal device 110 may perform activation autonomously without explicit indication from the network device 120.

In some embodiments, the terminal device 110 may apply the measurement offloading upon receiving an RRC message from a network device for the terminal device to transition from a connected mode to an idle or inactive mode. For example, the MR may offload measurements to the LP-WUR upon receiving the RRCConnectionRelease message. In some embodiments, the terminal device 110 may apply the measurement offloading upon receiving an RRC message from a network device for the terminal device to transition from an idle or inactive mode to a connected mode. For example, the LP-WUR may also offload measurements to the MR upon receiving the RRC setup message or the RRC resume message.

In some embodiments, the terminal device 110 may apply the measurement offloading upon receiving a first indication of the state transition from a network device. In some embodiments, the terminal device 110 may perform activation based on an indication from the network device 120, e.g. the network device 120, includes an indication on which cell to start to perform LP-WUR measurements. In some embodiments, the terminal device 110 may apply the measurement offloading upon a state transition initiated by the terminal device. In an example, the activation is performed when the "enter" conditions are satisfied on the terminal device 110 side.

Activation is considered to be different from the configuration 215. In other words, configuring the LP-WUR does not mean immediately activating the LP-WUR. Activation may occur on a provided trigger, or it may be associated with a condition. The condition the enables UE to activate the MR offloading to benefit the idle mode. For example, based on measurements, the terminal device 110 may activate the LP-WUR based on the serving cell measurement configuration.

In some embodiments, the at least one condition may be at least one first condition, and the terminal device 110 may further evaluate whether at least one second condition for activating the second type of radio is satisfied based on at least one measurement performed in the first state. If the at least one second condition is satisfied, the terminal device 110 may activate the second type of radio.

For instance, the LP-WUR may be activated directly once the relaxation conditions are met. (e.g. the LP-WUR may be already in connected mode). In an example, the terminal device 110 may activate the LP-WUR once the conditions are met regardless if the conditions are met in idle mode or inactive mode.

Alternatively or additionally, in order to evaluate whether at least one second condition is satisfied, the terminal device 110 may determine whether a first power for the second type of radio to perform the at least one measurement is below a first threshold, and determine whether a second power for the second type of radio and the first type of radio to perform the at least one measurement is below a second threshold. Additionally, the terminal device 110 may activate the second type of radio if the first power is below the first threshold and the second power is below the second threshold.

For example, if the power of the LP-WUR is very low and the effort of maintaining parallel measurements of the LP-WUR and the MR on serving cell is low, this may be beneficial for the terminal device 110 to already start it once the conditions are met.

In addition, the first threshold and the second threshold may be predefined or stored by the terminal device 110 or configured by the network device 120. The terminal device 110 may perform serving cell measurements in connected mode and evaluates serving cell measurements against LP-WUS entry threshold specified. If the accuracy requirements required by the LP-WUS entry conditions are met, upon receiving the RRCRelease message, the terminal device 110 activates LP-WUR.

In some embodiments, the terminal device 110 may evaluate whether the at least one second condition for activating the second type of radio is satisfied periodically. In other words, the condition evaluation may be periodical, e.g. the terminal device 110 performs recurring evaluation on serving cell.

In some embodiments, the at least one second condition and the at least one first condition may be the same. For instance, the conditions for the LP-WUR activation may be (re-)using the conditions defined for offloading when the terminal device 110 is idle / inactive mode but using the measurements obtained while in connected mode.

In addition, if the second type of radio is activated in the first state, the terminal device 110 may keep the second type of radio activated upon transitioning to the second state. For example, if the terminal device 110 uses the LP-WUR in the CONNECTED mode, it may continue to use the LP-WUR in case the same cell is selected after or during a connected to idle/inactive mode transition.

In some embodiments, the RRC message may further comprise a second indication that the terminal device 110 is allowed to perform at least one measurement by the second type of radio. For example, the network device 120 is required to include an indication in the RRCRelease message indicating that the terminal device 110 is allowed to switch directly to LP-WUR.

In some embodiments, the network device 120 may transmit a third indication of applying the measurement offloading upon receiving an RRC message to the terminal device 110. Correspondingly, the terminal device 110 may receive the third indication of applying the measurement offloading upon receiving an RRC message from a network device. For example, the network device 120 may indicate the terminal device 110 to perform the evaluation of MR offloading at the time of receiving RRCRelease message.

In addition, the RRC message may further comprise a fourth indication that whether the terminal device 110 is allowed to perform at least one measurement by the second type of radio upon the state transition from the first state to a second state. For example, the network device 120 indicates in the RRCConnectionRelease message that the UE is or is not allowed to use the LP-WUR in idle/inactive mode immediately. The terminal device 110 starts LP-WUS monitoring immediately after connection release if the network device 120 indicates that the terminal device 110 is allowed to use the LP-WUR in IDLE/INACTIVE mode immediately.

In an example, the fourth indication may indicate that the terminal device 110 is not allowed to perform at least one measurement by the second type of radio upon the state transition from the first state to a second state, and the terminal device 110 may evaluate whether at least one second condition for activating the second type of radio is satisfied in the second state, and maintain at least one measurement of the first type of radio.

For instance, if the network device 120 indicates in dedicated configuration that the terminal device 110 is not allowed to start LP-WUS monitoring immediately, the terminal device 110 may start to evaluate LP-WUS monitoring entry condition in idle mode (no immediate offloading). The terminal device 110 may be required to still maintain MR measurements for e.g. neighbouring and serving cells.

In addition, if the terminal device 110 was using LP-WUR in connected mode, it continues to use LP-WUR in idle/inactive mode. If the terminal device 110 was not using LP-WUR in connected mode, then it starts to evaluate, if any, LP-WUS monitoring entry condition.

Alternatively or additionally, the terminal device 110 may further transmit the following to the network device 120: a fifth indication of whether the measurement offloading is applied, an enabling status of the first type of radio, an enabling status of the second type of radio, measurement information of the first type of radio, measurement information of the second type of radio, a maintaining configuration of the first type of radio, a maintaining configuration of the second type of radio, or any combination of two or more of the above-mentioned items.

For instance, the terminal device 110 may or may not indicate to the network device 120 whether LP-WUR offloading is applied. i.e., there may be a new indication/flag that the terminal device 110 is required to transmit. In addition, the terminal device 110 may transfer status of the MR and/or the LP-WUR (e.g. enabled/disabled), measurement related information of MR and/or LP-WUR, information associated with the LP-WUR or the MR (e.g. status flags, maintaining configurations etc.).

On the other side of the communication, the network device 120 may receive the following from the terminal device 110: a fifth indication of whether the measurement offloading is applied, an enabling status of the first type of radio, an enabling status of the second type of radio, measurement information of the first type of radio, measurement information of the second type of radio, a maintaining configuration of the first type of radio, a maintaining configuration of the second type of radio, or any combination of two or more of the above-mentioned items.

In view of the process 200, a method and solution is proposed for enabling the terminal device 110 offloading measurements from MR to LP-WUR immediately after having entered the idle or inactive state. Hence, early activation of the use of LP-WUR based on measurements performed while UE was in connected state is facilitated. Based on the serving cell measurements performed while in connected mode, together with the necessary information to perform evaluation for LP-WUR offloading that have been provided, the terminal device 110 may benefit from applying offloading to LP-WUR immediately after connection has been released.

Table 1 illustrates different options for the configuration 215.

**Table 1 different options for the configuration 215**

| Configuration | RS/LR type | Cells to be measured by LR (others may be relaxed) | Trigger | Impact |
|---|---|---|---|---|
| Dedicated serving cell measurement configuration | PSS/SSS | Serving and / or neighbouring cell(s) | - Upon conditions are met; | LR offloading is ready directly in idle mode |
| | | | - RRCRelease | |
| Dedicated measurement config in connected mode that configures idle mode behaviour | LP-SS | Serving cell and/or neighbouring cell(s) | - Upon conditions are met; | LR offloading is ready directly in idle mode |
| | PSS/SSS | | - RRCRelease can be used as a trigger | |
| Dedicated measurement config in RRCRelease or previous system information | LP-SS | Serving cell and/or neighbouring cell(s) | - Upon conditions are met; | LR offloading procedure is started from RRCRelease, and activated immediately once finished. |
| | PSS/SSS | | - RRCRelease can be used as a trigger | |

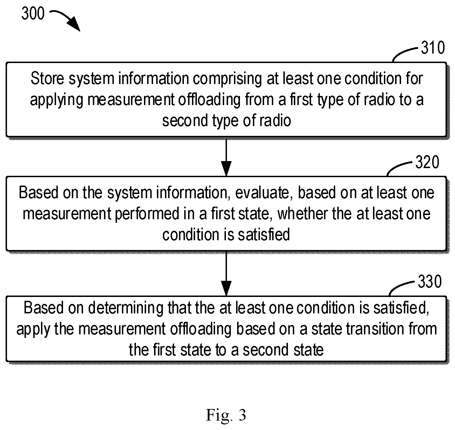

Fig. 3 shows a flowchart of an example method 300 implemented at a terminal device 110 in accordance with some embodiments of the present disclosure. For the purpose of discussion, the method 300 will be described from the perspective of the terminal device 110 with reference to Fig. 1A. It is to be understood that some embodiments described in connection with process 200 are also applicable to the method 300, and will not be described again here.

At block 310, the terminal device 110 stores system information comprising at least one condition for applying measurement offloading from a first type of radio to a second type of radio. For example, the terminal device 110 may store SIB. The terminal device 110 may store the SIB configuration associated at least with the serving cell. The terminal device 110 may also store SIB of the neighbouring cells, if this is contained in the SIB configuration provided by the cell.

Alternatively or additionally, the first type of radio may comprise a MR, and the second type of radio may comprise a LP-WUR. In some embodiments, the first type of radio may comprise a LP-WUR, and the second type of radio may comprise a MR.

In some embodiments, the terminal device 110 may store the system information in the first state. In addition, the terminal device 110 may maintain the system information from the second state to the first state.

In addition, based on the system information, the terminal device 110 may obtain at least one parameter for the second type of radio, the terminal device 110 may then store the at least one parameter. For example, the terminal device 110 may read and decode the SIB and store the corresponding LP-WUR parameters in the memory such that it is usable.

Additionally, the system information may be first system information associated with a serving cell of the terminal device, and the terminal device may further store second system information associated with at least one neighboring cell of the terminal device.

At block 320, based on the system information, the terminal device 110 evaluate, based on at least one measurement performed in a first state, whether the at least one condition is satisfied. For example, the terminal device 110 may maintain the SIB from idle mode to connected mode. For example, the terminal device 110 may perform an evaluation of the LP-WUR based on SIB configuration. The terminal device 110 may evaluate the LP-WUR offloading conditions (e.g. PSS/SSS based LP-WUR) based on the serving cell measurements. The terminal device 110 may use measurements measured in connected mode upon reading the SIB.

Alternatively or additionally, the first state may comprise a connected state, and the second state may comprise one of an idle state or an inactive state. Alternatively, the first state may comprise one of an idle state or an inactive state, and the second state may comprise a connected state.

In some embodiments, in order to evaluate whether the at least one condition is satisfied, the terminal device 110 may compare the at least one measurement with the at least one condition. For example, the terminal device 110 may compare the serving cell measurements performed on MR with pre-defined (e.g. SNR point) relaxation condition.

Additionally, the terminal device 110 may determine whether the at least one condition is satisfied upon transitioning from a connected state to an idle or inactive state or transitioning from an idle or inactive state to a connected state. For example, the terminal device 110 may performs the evaluation of the LP-WUR at the time of RRCRelease.

In addition, the terminal device 110 may determine whether the at least one condition is satisfied in the first state. For example, the terminal device 110 may performs the evaluation of the LP-WUR during connected mode. The terminal device 110 may read the SIB information either in connected or idle / inactive mode.

At block 330, based on determining that the at least one condition is satisfied, the terminal device 110 applies the measurement offloading based on a state transition from the first state to a second state.

In some embodiments, the terminal device 110 may apply the measurement offloading upon receiving an RRC message from a network device for the terminal device to transition from a connected state to an idle or inactive state. In some embodiments, the terminal device 110 may apply the measurement offloading upon receiving an RRC message from a network device for the terminal device to transition from an idle or inactive state to a connected state. In some embodiments, the terminal device 110 may apply the measurement offloading upon receiving an indication of the state transition from a network device. In some embodiments, the terminal device 110 may apply the measurement offloading upon a state transition initiated by the terminal device.

For example, upon receiving an RRCRelease message, the terminal device 110 may read the SIB that is stored, check the conditions, and start MR offloading to LP-WUR if the conditions included in the SIB have been met. There is no LP-WUR activation delay upon entering the idle mode and power of the terminal device 110 may be reduced immediately after entering idle mode (upon RRCRelease). The terminal device 110 stops performing other than serving cell measurements directly after entering idle mode.

In some embodiments, the at least one condition may be at least one first condition, and the terminal device 110 may further evaluate whether at least one second condition for activating the second type of radio is satisfied based on at least one measurement performed in the first state. If the at least one second condition is satisfied, the terminal device may activate the second type of radio.

Alternatively or additionally, in order to evaluate whether at least one second condition is satisfied, the terminal device 110 may determine whether a first power for the second type of radio to perform the at least one measurement is below a first threshold, and determine whether a second power for the second type of radio and the first type of radio to perform the at least one measurement is below a second threshold.

Additionally, the terminal device 110 may activate the second type of radio if the first power is below the first threshold and the second power is below the second threshold. In addition, the first threshold and the second threshold may be predefined or stored by the terminal device 110 or configured by the network device 120.

In some embodiments, the terminal device 110 may evaluate whether the at least one second condition for activating the second type of radio is satisfied periodically. In some embodiments, the at least one second condition and the at least one first condition may be the same.

In addition, if the second type of radio is activated in the first state, the terminal device 110 may keep the second type of radio activated upon transitioning to the second state. Alternatively or additionally, the terminal device 110 may further transmit an indication of whether the measurement offloading is applied to the network device 120.

In view of the method 300, the terminal device 110 may reduce or stop MR neighbouring cell measurements fully or partially depending on the final requirements defined for LP-WUS. When compared to the case where the terminal device 110 is not using LP-WUR, the total power consumption of the terminal device 110 is reduced. When compared to the case where UE is starting the LP-WUR activation in the idle mode, the terminal device 110 power consumption is reduced when this feature is in use. For example, upon entering idle mode, the terminal device 110 maintains MR measurements in parallel with LP-WUR measurements, the power consumption is higher than in a case where terminal device 110 directly activates the LP-WUR either during connected mode or upon entering idle mode. In the case that the measurements that terminal device 110 has not been performing, the measurement delay is longer than the case of the terminal device 110 has been performed the measurement. In the case that the LP-WUR and the MR can be observed independently, the MR activity is reduced immediately upon entering idle mode.

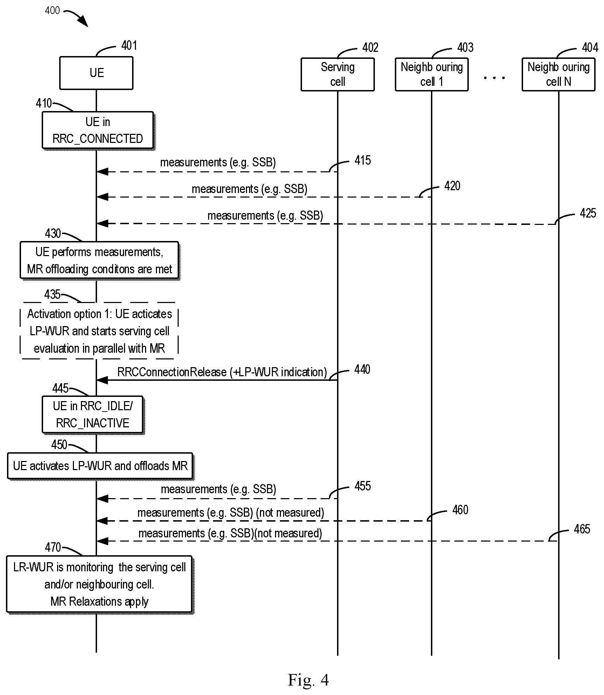

Fig. 4 illustrates an example procedure of proposed solution according to some embodiments of the present disclosure. The procedure 400 may involve a UE 401, a serving cell 402, a neighbouring cell 1 403, and a neighbouring cell N 404. It is to be understood that the number of neighbouring cells is only for the purpose of illustration without suggesting any limitations. The procedure 400 may include any suitable number of neighbouring cells adapted for implementing embodiments of the present disclosure. The procedure 400 can be considered as a more specific example of the process 200 in Fig. 2 or method 300 in Fig. 3. Thus, the UE 401 in Fig. 4 may be an example of the terminal device 110 in Fig. 1A.

As shown in Fig. 4, at 410, the UE 401 is in RRC_CONNECTED state. At 415, the UE 401 performs a measurement of the serving cell 402, and the measurement may be a PSS/SSS based measurement or a LP-SS measurement (e.g., a synchronization signal and PBCH block, SSB, measurement). At 420, the UE 401 performs a measurement of the neighbouring cell 1 403, and the measurement may be a PSS/SSS based measurement or a LP-SS measurement (e.g., an SSB measurement). At 425, the UE 401 performs a measurement of the neighbouring cell N 404, and the measurement may be a PSS/SSS based measurement or a LP-SS measurement (e.g., an SSB measurement).

At 430, the UE 401 performs measurements, and MR offloading conditions are met. The radio conditions (i.e., MR offloading conditions) are met such that the UE 401 is allowed to start the measurement offloading from a MR to a LP-WUR. It is to be understood that this doesn't necessarily mean that UE is starting the action, but the conditions are such that, for instance the relaxations may be applied.

Alternatively or additionally, at 435, the UE 401 may activate the LP-WUR and start serving cell evaluation in parallel with the MR. In other words, the UE activates the measurements immediately upon evaluating the conditions.

At 440, the UE 401 receives an RRC Connection release message from the serving cell 402. Alternatively or additionally, the RRC Connection release message may comprise a dedicated configuration for MR offloading, an indication of whether to perform MR offloading, or a trigger point for MR offloading.

At 445, the UE 401 is in IDLE/INACTIVE state. At 450, the UE 401 may activate the LP-WUR (if the LP-WUR is not activated at 445) and perform the measurement offloading from the MR to the LP-WUR.

At 455, the UE 401 performs a measurement of the serving cell 302, and the measurement may be performed by the LP-WUR. At 455, the UE 401 performs a measurement of the serving cell 302, and the measurement may be performed by the LP-WUR. At 460, the UE 401 performs a measurement of the neighbouring cell 1 303, and the measurement may be performed by the LP-WUR. At 465, the UE 401 performs a measurement of the neighbouring cell N 304, and the measurement may be performed by the LP-WUR. The measurement of neighbouring cells at 460 and 465 may be turned off.

At 470, the LP-WUR of the UE 401 is monitoring the serving cell and/or neighbouring cells, and the MR relaxation is applied.

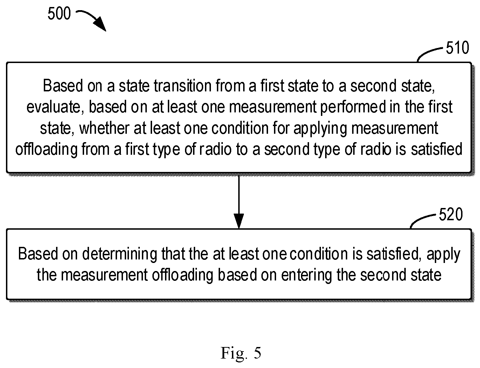

Fig. 5 shows a flowchart of an example method 500 implemented at a terminal device in accordance with some embodiments of the present disclosure. For the purpose of discussion, the method 500 will be described from the perspective of the terminal device 110 with reference to Fig. 1A.

At block 510, based on a state transition from a first state to a second state, the terminal device 110 evaluates, based on at least one measurement performed in the first state, whether at least one condition for applying measurement offloading from a first type of radio to a second type of radio is satisfied. At block 520, based on determining that the at least one condition is satisfied, the terminal device 110 applies the measurement offloading based on entering the second state.

In some embodiments, the first state may comprise a connected state, and the second state comprises one of an idle state or an inactive state. In some embodiments, the first state may comprise one of an idle state or an inactive state, and the second state comprises a connected state.

In some embodiments, the first type of radio may comprise a main radio (MR), and the second type of radio may comprise a low-power wake-up receiver (LP-WUR), or the first type of radio may comprise a LP-WUR, and the second type of radio comprises a MR.

In some embodiments, the at least one condition may be predefined; the at least one condition may be indicated in broadcasted system information stored by the terminal device, or the at least one condition may be indicated in a configuration received via a radio resource control (RRC) message.

In some embodiments, in order to evaluate whether the at least one condition is satisfied, the terminal device 110 may compare at least one value of the at least one measurement with one or more thresholds associated with the at least one condition. In some embodiments, the one or more thresholds may be the same, or the one or more thresholds may be different.

In some embodiments, in order to evaluate whether the at least one condition is satisfied, the terminal device 110 may determining whether the at least one condition is satisfied upon transitioning from a connected state to an idle or inactive state or transitioning from an idle or inactive state to a connected state.

In some embodiments, in order to apply the measurement offloading, the terminal device 110 may apply the measurement offloading upon receiving an RRC message from a network device for the terminal device to transition from a connected state to an idle or inactive state, or apply the measurement offloading upon receiving an RRC message from a network device for the terminal device to transition from an idle or inactive state to a connected state, or apply the measurement offloading upon receiving a first indication of the state transition from a network device; or apply the measurement offloading upon a state transition initiated by the terminal device.

In some embodiments, the terminal device 110 may further evaluate, based on at least one measurement performed in the first state, whether at least one second condition for activating the second type radio is satisfied; and activate the second type radio based on determining that the at least one second condition is satisfied.

In some embodiments, in order to evaluate whether the at least one second condition is satisfied, the terminal device 110 may determine whether a first power for the second type of radio to perform the at least one measurement is below a first threshold; and determine whether a second power for the second type of radio and the first type of radio to perform the at least one measurement is below a second threshold.

In some embodiments, in order to activate the second type of radio, the terminal device 110 may activate the second type of radio based on determining that the first power is below the first threshold and the second power is below the second threshold.

In some embodiments, the first threshold and the second threshold may be predefined or stored by the terminal device or configured by a network device.

In some embodiments, in order to evaluate whether the at least one second condition is satisfied, the terminal device 110 may evaluate whether the at least one second condition for activating the second type of radio is satisfied periodically. In some embodiments, the at least one second condition and the at least one first condition may be the same.

In some embodiments, based on determine that the second type of radio is activated in the first state, the terminal device 110 may further keep the second type of radio activated upon transitioning to the second state.

In some embodiments, the RRC message may further comprise a second indication that the terminal device is allowed to perform at least one measurement by the second type of radio. In some embodiments, the terminal device 110 may further receive, from a network device, a third indication of applying the measurement offloading upon receiving or an RRC message.

In some embodiments, the RRC message may further comprise a fourth indication that whether the terminal device is allowed to perform at least one measurement by the second type of radio upon the state transition from the first state to a second state.

In some embodiments, the fourth indication may indicate that the terminal device is not allowed to perform at least one measurement by the second type of radio upon the state transition from the first state to a second state. In some embodiments, in order to evaluate whether at least one second condition for activating the second type of radio is satisfied, the terminal device 110 may evaluate whether at least one second condition for activating the second type of radio is satisfied in the second state; and maintain at least one measurement of the first type of radio.

In some embodiments, the terminal device 110 may further transmit, to a network device, at least one of the following: a fifth indication of whether the measurement offloading is applied; an enabling status of the first type of radio; an enabling status of the second type of radio; measurement information of the first type of radio; measurement information of the second type of radio; a maintaining configuration of the first type of radio; or a maintaining configuration of the second type of radio.

In some embodiments, the at least one measurement may be performed by the first type of radio; or the at least one measurement may be performed by the second type of radio.

In some embodiments, the at least one measurement may be performed based on at least one of a primary synchronization signal (PSS) or a secondary synchronization signal (SSS) or the at least one measurement may be performed based on a low power synchronization signal (LP-SS).

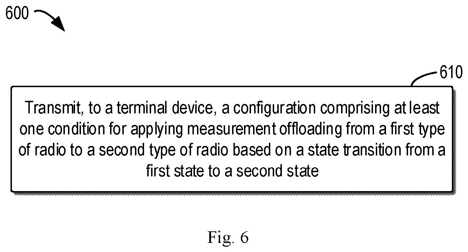

Fig. 6 shows a flowchart of an example method 600 implemented at a network device in accordance with some embodiments of the present disclosure. For the purpose of discussion, the method 600 will be described from the perspective of the network device 120 with reference to Fig. 1A.

At block 610, the network device 120 transmits, to a terminal device, a configuration comprising at least one condition for applying measurement offloading from a first type of radio to a second type of radio based on a state transition from a first state to a second state.

In some embodiments, the first state may comprise a connected state, and the second state may comprise one of an idle state or an inactive state. In some embodiments, the first state may comprise one of an idle state or an inactive state, and the second state may comprise a connected state.

In some embodiments, the first type of radio may comprise a main radio (MR), and the second type of radio may comprise a low-power wake-up receiver (LP-WUR), or the first type of radio may comprise a LP-WUR, and the second type of radio may comprise a MR.

In some embodiments, the configuration may be transmitted via at least one of the following: system information, or a radio resource control (RRC) message. In some embodiments, in order to transmit the configuration, the network device 120 may transmit the configuration to the terminal device in the first state or the second state.

In some embodiments, the at least one condition may be associated with one or more thresholds for at least one value of at least one measurement performed by the terminal device in the first state. In some embodiments, the one or more thresholds may be the same; or the one or more thresholds may be different.

In some embodiments, the RRC message may further comprise a second indication that the terminal device is allowed to perform at least one measurement by the second type of radio. In some embodiments, the network device 120 may further transmit, to the terminal device, a third indication of applying the measurement offloading upon receiving an RRC message.

In some embodiments, the RRC message may further comprise a fourth indication that whether the terminal device is allowed to perform at least one measurement by the second type of radio upon the state transition from the first state to a second state.

In some embodiments, the network device 120 may further receive, from the terminal device, one of the following: a fifth indication of whether the measurement offloading is applied, an enabling status of the first type of radio, an enabling status of the second type of radio, measurement information of the first type of radio, measurement information of the second type of radio, a maintaining configuration of the first type of radio, or a maintaining configuration of the second type of radio.

In some embodiments, an apparatus capable of performing any of the method 300 (for example, the terminal device 110) is provided. The apparatus may comprise means for performing the respective steps of the method 300. The means may be implemented in any suitable form. For example, the means may be implemented in a circuitry or software module.

In some embodiments, the apparatus comprises means for storing system information comprising at least one condition for applying measurement offloading from a first type of radio to a second type of radio, means for based on the system information, evaluating, based on at least one measurement performed in a first state, whether the at least one condition is satisfied, and means for based on determining that the at least one condition is satisfied, applying the measurement offloading based on a state transition from the first state to a second state.

In some embodiments, the first state may comprise a connected state, and the second state comprises one of an idle state or an inactive state. In some embodiments, the first state may comprise one of an idle state or an inactive state, and the second state may comprise a connected state.

In some embodiments, the first type of radio may comprise a main radio (MR), and the second type of radio may comprise a low-power wake-up receiver (LP-WUR), or the first type of radio may comprise a LP-WUR, and the second type of radio comprises a MR.

In some embodiments, means for storing the system information may comprise means for storing the system information in the first state. In some embodiments, the apparatus may further comprise means for maintaining the system information from the second state to the first state.

In some embodiments, means for evaluating whether the at least one condition is satisfied may comprise means for comparing the at least one measurement with the at least one condition.

In some embodiments, means for evaluating whether the at least one condition is satisfied may comprise means for determining whether the at least one condition is satisfied upon transitioning from a connected state to an idle or inactive state or transitioning from an idle or inactive state to a connected state, or means for determining whether the at least one condition is satisfied in the first state.

In some embodiments, means for applying the measurement offloading may comprise means for applying the measurement offloading upon receiving an RRC message from a network device for the terminal device to transition from a connected state to an idle or inactive state, means for applying the measurement offloading upon receiving an RRC message from a network device for the terminal device to transition from an idle or inactive state to a connected state, means for applying the measurement offloading upon receiving a first indication on which cell to start performing the at least one measurement by the second type of radio or means for applying the measurement offloading upon a state transition initiated by the terminal device.

In some embodiments, the at least one condition may be at least one first condition, the apparatus may further comprise means for evaluating, based on at least one measurement performed in the first state, whether at least one second condition for activating the second type of radio is satisfied, and means for activating the second type of radio based on determining that the at least one second condition is satisfied.

In some embodiments, means for evaluating whether the at least one second condition is satisfied may comprise means for determining whether a first power for the second type of radio to perform the at least one measurement is below a first threshold, and means for determining whether a second power for the second type of radio and the first type of radio to perform the at least one measurement is below a second threshold.

In some embodiments, means for activating the second type of radio may comprise means for activating the second type of radio based on determining that the first power is below the first threshold and the second power is below the second threshold.

In some embodiments, at least one of the first threshold or the second threshold may be predefined or stored by the terminal device or configured by a network device. In some embodiments, means for evaluating whether the at least one condition is satisfied may comprise means for evaluating whether the at least one second condition for activating the second type of radio is satisfied periodically.

In some embodiments, the at least one second condition and the at least one first condition may be the same. In some embodiments, the apparatus may further comprise means for based on determining that the second type of radio is activated in the first state, keeping the second type of radio activated upon transitioning to the second state.

In some embodiments, the apparatus may further comprise means for transmitting, to a network device, a second indication of whether the measurement offloading is applied. In some embodiments, the apparatus may further comprise means for obtaining, based on the system information, at least one parameter for the second type of radio, and means for storing the at least one parameter.

In some embodiments, the system information may be first system information associated with a serving cell of the terminal device, the apparatus may further comprise means for storing second system information associated with at least one neighboring cell of the terminal device.

In some embodiments, the apparatus further comprises means for performing other steps in some embodiments of the method 300. In some embodiments, the means comprises at least one processor and at least one memory including computer program code, the at least one memory and computer program code configured to, with the at least one processor, cause the performance of the apparatus.

In some embodiments, an apparatus capable of performing any of the method 500 (for example, the terminal device 110) is provided. The apparatus may comprise means for performing the respective steps of the method 500. The means may be implemented in any suitable form. For example, the means may be implemented in a circuitry or software module.

In some embodiments, the apparatus comprises means for based on a state transition from a first state to a second state, evaluating, based on at least one measurement performed in the first state, whether at least one condition for applying measurement offloading from a first type of radio to a second type of radio is satisfied, and means for based on determining that the at least one condition is satisfied, applying the measurement offloading based on entering the second state.

In some embodiments, the first state may comprise a connected state, and the second state may comprise one of an idle state or an inactive state. In some embodiments, the first state may comprise one of an idle state or an inactive state, and the second state may comprise a connected state.

In some embodiments, the first type of radio may comprise a main radio (MR), and the second type of radio may comprise a low-power wake-up receiver (LP-WUR), or the first type of radio may comprise a LP-WUR, and the second type of radio may comprise a MR.

In some embodiments, the at least one condition may be predefined, the at least one condition may be indicated in broadcasted system information stored by the terminal device, or the at least one condition may be indicated in a configuration received via a radio resource control (RRC) message.

In some embodiments, means for evaluating whether the at least one condition is satisfied may comprise means for comparing at least one value of the at least one measurement with one or more thresholds associated with the at least one condition. In some embodiments, the one or more thresholds may be the same, or the one or more thresholds may be different.

In some embodiments, means for evaluating whether the at least one condition is satisfied may comprise means for determining whether the at least one condition is satisfied upon transitioning from a connected state to an idle or inactive state or transitioning from an idle or inactive state to a connected state.

In some embodiments, means for applying the measurement offloading may comprise means for applying the measurement offloading upon receiving an RRC message from a network device for the terminal device to transition from a connected state to an idle or inactive state, or applying the measurement offloading upon receiving an RRC message from a network device for the terminal device to transition from an idle or inactive state to a connected state, or applying the measurement offloading upon receiving a first indication of the state transition from a network device, or applying the measurement offloading upon a state transition initiated by the terminal device.

In some embodiments, the at least one condition may be at least one first condition, the apparatus may comprise means for evaluating, based on at least one measurement performed in the first state, whether at least one second condition for activating the second type radio is satisfied, and means for activating the second type radio based on determining that the at least one second condition is satisfied.

In some embodiments, means for evaluating whether the at least one second condition is satisfied may comprise means for determining whether a first power for the second type of radio to perform the at least one measurement is below a first threshold, and means for determining whether a second power for the second type of radio and the first type of radio to perform the at least one measurement is below a second threshold.

In some embodiments, means for activating the second type of radio may comprise means for activating the second type of radio based on determining that the first power is below the first threshold and the second power is below the second threshold. In some embodiments, the first threshold and the second threshold may be predefined or stored by the terminal device or configured by a network device.

In some embodiments, means for evaluating whether the at least one second condition is satisfied may comprise means for evaluating whether the at least one second condition for activating the second type of radio is satisfied periodically. In some embodiments, the at least one second condition and the at least one first condition may be the same.

In some embodiments, the apparatus may comprise means for based on determining that the second type of radio is activated in the first state, keeping the second type of radio activated upon transitioning to the second state. In some embodiments, the RRC message may further comprise a second indication that the terminal device is allowed to perform at least one measurement by the second type of radio.

In some embodiments, the apparatus may comprise means for receiving, from a network device, a third indication of applying the measurement offloading upon receiving or an RRC message.

In some embodiments, the RRC message may further comprise a fourth indication that whether the terminal device is allowed to perform at least one measurement by the second type of radio upon the state transition from the first state to a second state.

In some embodiments, the fourth indication may indicate that the terminal device is not allowed to perform at least one measurement by the second type of radio upon the state transition from the first state to a second state, and means for evaluating whether at least one second condition for activating the second type of radio is satisfied may comprise means for evaluating whether at least one second condition for activating the second type of radio is satisfied in the second state; and means for maintaining at least one measurement of the first type of radio.

In some embodiments, the apparatus may comprise means for transmitting, to a network device, at least one of the following: a fifth indication of whether the measurement offloading is applied, an enabling status of the first type of radio, an enabling status of the second type of radio, measurement information of the first type of radio, measurement information of the second type of radio, a maintaining configuration of the first type of radio, or a maintaining configuration of the second type of radio.

In some embodiments, the at least one measurement may be performed by the first type of radio, or the at least one measurement may be performed by the second type of radio. In some embodiments, the at least one measurement may be performed based on at least one of a primary synchronization signal (PSS) or a secondary synchronization signal (SSS) or the at least one measurement may be performed based on a low power synchronization signal (LP-SS).

In some embodiments, the apparatus further comprises means for performing other steps in some embodiments of the method 500. In some embodiments, the means comprises at least one processor and at least one memory including computer program code, the at least one memory and computer program code configured to, with the at least one processor, cause the performance of the apparatus.

In some embodiments, an apparatus capable of performing any of the method 600 (for example, the network device 120) is provided. The apparatus may comprise means for performing the respective steps of the method 600. The means may be implemented in any suitable form. For example, the means may be implemented in a circuitry or software module.

In some embodiments, the apparatus comprises means for transmitting, to a terminal device, a configuration comprising at least one condition for applying measurement offloading from a first type of radio to a second type of radio based on a state transition from a first state to a second state.

In some embodiments, the first state may comprise a connected state, and the second state may comprise one of an idle state or an inactive state. In some embodiments, the first state may comprise one of an idle state or an inactive state, and the second state may comprise a connected state.

In some embodiments, the first type of radio may comprise a main radio (MR), and the second type of radio may comprise a low-power wake-up receiver (LP-WUR), or the first type of radio may comprise a LP-WUR, and the second type of radio may comprise a MR.

In some embodiments, the configuration may be transmitted via at least one of the following: system information, or a radio resource control (RRC) message. In some embodiments, means for transmitting the configuration may comprise means for transmitting the configuration to the terminal device in the first state or the second state.

In some embodiments, the at least one condition may be associated with one or more thresholds for at least one value of at least one measurement performed by the terminal device in the first state. In some embodiments, the one or more thresholds may be the same; or the one or more thresholds may be different.

In some embodiments, the RRC message may further comprise a second indication that the terminal device is allowed to perform at least one measurement by the second type of radio.

In some embodiments, the apparatus may comprise means for transmitting, to the terminal device, a third indication of applying the measurement offloading upon receiving an RRC message.

In some embodiments, the RRC message may further comprise a fourth indication that whether the terminal device is allowed to perform at least one measurement by the second type of radio upon the state transition from the first state to a second state.

In some embodiments, the apparatus may further comprise means for receiving, from the terminal device, one of the following: a fifth indication of whether the measurement offloading is applied, an enabling status of the first type of radio, an enabling status of the second type of radio, measurement information of the first type of radio, measurement information of the second type of radio, a maintaining configuration of the first type of radio, or a maintaining configuration of the second type of radio.

In some embodiments, the device further comprises means for performing other steps in some embodiments of the method 600. In some embodiments, the means comprises at least one processor and at least one memory including computer program code, the at least one memory and computer program code configured to, with the at least one processor, cause the performance of the device.

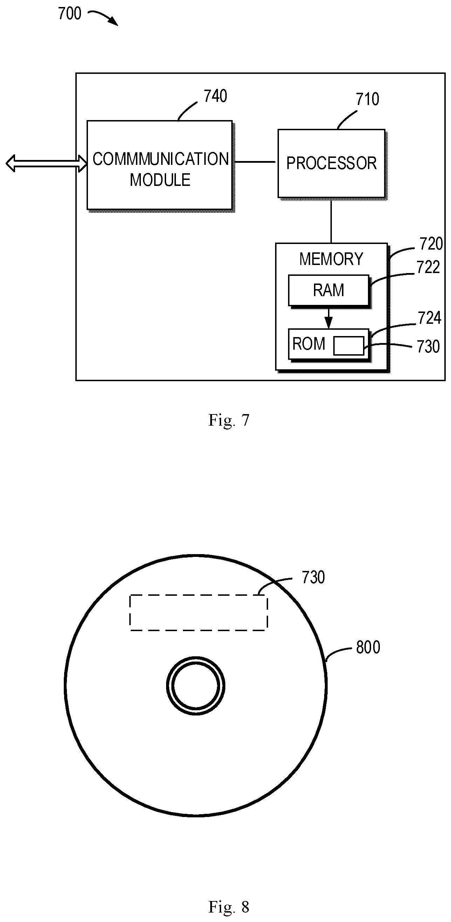

FIG. 7 is a simplified block diagram of a device 700 that is suitable for implementing embodiments of the present disclosure. The device 700 may be provided to implement the communication device, for example the terminal device 110 or the network device 120 as shown in Fig. 1A. As shown, the device 700 includes one or more processors 710, one or more memories 720 coupled to the processor 710, and one or more communication modules 740 coupled to the processor 710.

The communication modules 740 is for bidirectional communications. The communication modules 740 has at least one antenna to facilitate communication. The communication interface may represent any interface that is necessary for communication with other network elements.

The processor 710 may be of any type suitable to the local technical network and may include one or more of the following: general purpose computers, special purpose computers, microprocessors, digital signal processors (DSPs) and processors based on multicore processor architecture, as non-limiting examples. The device 700 may have multiple processors, such as an application specific integrated circuit chip that is slaved in time to a clock which synchronizes the main processor.

The memory 720 may include one or more non-volatile memories and one or more volatile memories. Examples of the non-volatile memories include, but are not limited to, a read only memory (ROM) 724, an electrically programmable read only memory (EPROM), a flash memory, a hard disk, a compact disc (CD), a digital video disk (DVD), and other magnetic storage and/or optical storage. Examples of the volatile memories include, but are not limited to, a random access memory (RAM) 722 and other volatile memories that will not last in the power-down duration.

A computer program 730 includes computer executable instructions that are executed by the associated processor 710. The program 730 may be stored in the ROM 724. The processor 710 may perform any suitable actions and processing by loading the program 730 into the RAM 722.

The embodiments of the present disclosure may be implemented by means of the program 730 so that the device 700 may perform any process of example embodiments of the disclosure as discussed with reference to Figs. 2 to 6. The embodiments of the present disclosure may also be implemented by hardware or by a combination of software and hardware.

In some embodiments, the program 730 may be tangibly contained in a computer readable medium which may be included in the device 700 (such as in the memory 720) or other storage devices that are accessible by the device 700. The device 700 may load the program 730 from the computer readable medium to the RAM 722 for execution. The computer readable medium may include any types of tangible non-volatile storage, such as ROM, EPROM, a flash memory, a hard disk, CD, DVD, and the like. Fig. 8 shows an example of the computer readable medium 800 in form of CD or DVD. The computer readable medium has the program 830 stored thereon.

Generally, various embodiments of the present disclosure may be implemented in hardware or special purpose circuits, software, logic or any combination thereof. Some aspects may be implemented in hardware, while other aspects may be implemented in firmware or software which may be executed by a controller, microprocessor or other computing device. While various aspects of embodiments of the present disclosure are illustrated and described as block diagrams, flowcharts, or using some other pictorial representations, it is to be understood that the block, apparatus, system, technique or method described herein may be implemented in, as non-limiting examples, hardware, software, firmware, special purpose circuits or logic, general purpose hardware or controller or other computing devices, or some combination thereof.

Example embodiments of the present disclosure also provides at least one computer program product tangibly stored on a non-transitory computer readable storage medium. The computer program product includes computer-executable instructions, such as those included in program modules, being executed in a device on a target real or virtual processor, to carry out the methods 400, and 500 as described above with reference to Figs. 4-5. Generally, program modules include routines, programs, libraries, objects, classes, components, data structures, or the like that perform particular tasks or implement particular abstract data types. The functionality of the program modules may be combined or split between program modules as desired in various embodiments. Machine-executable instructions for program modules may be executed within a local or distributed device. In a distributed device, program modules may be located in both local and remote storage media.

Program code for carrying out methods of example embodiments of the present disclosure may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of the present disclosure, the computer program codes or related data may be carried by any suitable carrier to enable the device, apparatus or processor to perform various processes and operations as described above. Examples of the carrier include a signal, computer readable medium, and the like.

The computer readable medium may be a computer readable signal medium or a computer readable storage medium. A computer readable medium may include but not limited to an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. The term "non-transitory," as used herein, is a limitation of the medium itself (i.e., tangible, not a signal) as opposed to a limitation on data storage persistency (e.g., RAM vs. ROM).

Further, while operations are depicted in a particular order, this should not be understood as requiring that such operations be performed in the particular order shown or in sequential order, or that all illustrated operations be performed, to achieve desirable results. In certain circumstances, multitasking and parallel processing may be advantageous. Likewise, while several specific implementation details are contained in the above discussions, these should not be construed as limitations on the scope of the present disclosure, but rather as descriptions of features that may be specific to particular embodiments. Certain features that are described in the context of separate embodiments may also be implemented in combination in a single embodiment. Conversely, various features that are described in the context of a single embodiment may also be implemented in multiple embodiments separately or in any suitable sub-combination.

Although example embodiments of the present disclosure have been described in languages specific to structural features and/or methodological acts, it is to be understood that the example embodiments of the present disclosure defined in the appended claims is not necessarily limited to the specific features or acts described above. Rather, the specific features and acts described above are disclosed as example forms of implementing the claims.

The present subject matter may comprise the following clauses.
**Clause 1.** A terminal device comprising: at least one processor; and at least one memory storing instructions that, when executed by the at least one processor, cause the terminal device at least to: store system information comprising at least one condition for applying measurement offloading from a first type of radio to a second type of radio; based on the system information, evaluate, based on at least one measurement performed in a first state, whether the at least one condition is satisfied; and based on determining that the at least one condition is satisfied, apply the measurement offloading based on a state transition from the first state to a second state.
**Clause 2.** The terminal device of Clause 1, wherein the first state comprises a connected state, and the second state comprises one of an idle state or an inactive state.
**Clause 3.** The terminal device of Clause 1, wherein the first state comprises one of an idle state or an inactive state, and the second state comprises a connected state.
**Clause 4.** The terminal device of any of Clauses 1-3, wherein one of the following: the first type of radio comprises a main radio (MR), and the second type of radio comprises a low-power wake-up receiver (LP-WUR); or the first type of radio comprises a LP-WUR, and the second type of radio comprises a MR.
**Clause 5.** The terminal device of any of Clauses 1-4, wherein terminal device is caused to store the system information by: storing the system information in the first state.
**Clause 6.** The terminal device of any of Clauses 1-5, wherein the terminal device is further caused to: maintain the system information from the second state to the first state.
**Clause 7.** The terminal device of any of Clauses 1-6, wherein the terminal device is caused to evaluate whether the at least one condition is satisfied by: comparing the at least one measurement with the at least one condition.
**Clause 8.** The terminal device of any of Clauses 1-7, wherein the terminal device is caused to evaluate whether the at least one condition is satisfied by at least one of the following: determining whether the at least one condition is satisfied upon transitioning from a connected state to an idle or inactive state or transitioning from an idle or inactive state to a connected state; or determining whether the at least one condition is satisfied in the first state.
**Clause 9.** The terminal device of any of Clauses 1-8, wherein the terminal device is caused to apply the measurement offloading by at least one of the following: applying the measurement offloading upon receiving an RRC message from a network device for the terminal device to transition from a connected state to an idle or inactive state; applying the measurement offloading upon receiving an RRC message from a network device for the terminal device to transition from an idle or inactive state to a connected state; applying the measurement offloading upon receiving a first indication on which cell to start performing the at least one measurement by the second type of radio; or applying the measurement offloading upon a state transition initiated by the terminal device.
**Clause 10.** The terminal device of any of Clauses 1-9, wherein the at least one condition is at least one first condition, and the terminal device is further caused to: evaluate, based on at least one measurement performed in the first state, whether at least one second condition for activating the second type of radio is satisfied; and activate the second type of radio based on determining that the at least one second condition is satisfied.
**Clause 11.** The terminal device of Clause 10, wherein the terminal device is caused to evaluate whether the at least one second condition is satisfied by: determining whether a first power for the second type of radio to perform the at least one measurement is below a first threshold; and determining whether a second power for the second type of radio and the first type of radio to perform the at least one measurement is below a second threshold.
**Clause 12.** The terminal device of Clause 10 or 11, wherein the terminal device is caused to activate the second type of radio by: activating the second type of radio based on determining that the first power is below the first threshold and the second power is below the second threshold.
**Clause 13.** The terminal device of any of Clauses 10-12, wherein at least one of the first threshold or the second threshold is predefined or stored by the terminal device or configured by a network device.
**Clause 14.** The terminal device of any of Clauses 10-13, wherein the terminal device is caused to evaluate whether the at least one condition is satisfied by: evaluating whether the at least one second condition for activating the second type of radio is satisfied periodically.
**Clause 15.** The terminal device of any of Clauses 10-14, wherein the at least one second condition and the at least one first condition are the same.
**Clause 16.** The terminal device of any of Clauses 1-15, wherein the terminal device is further caused to: based on determining that the second type of radio is activated in the first state, keep the second type of radio activated upon transitioning to the second state.
**Clause 17.** The terminal device of any of Clauses 1-16, wherein the terminal device is further caused to: transmit, to a network device, a second indication of whether the measurement offloading is applied.
**Clause 18.** The terminal device of any of Clauses 1-17, wherein the terminal device is further caused to: obtain, based on the system information, at least one parameter for the second type of radio; and store the at least one parameter.
**Clause 19.** The terminal device of any of Clauses 1-18, wherein the system information is first system information associated with a serving cell of the terminal device, and the terminal device is further caused to: store second system information associated with at least one neighboring cell of the terminal device.
**Clause 20.** A method comprising: storing system information comprising at least one condition for applying measurement offloading from a first type of radio to a second type of radio; based on the system information, evaluating, based on at least one measurement performed in a first state, whether the at least one condition is satisfied; and based on determining that the at least one condition is satisfied, applying the measurement offloading based on a state transition from the first state to a second state.
**Clause 21.** An apparatus comprising: means for storing system information comprising at least one condition for applying measurement offloading from a first type of radio to a second type of radio; means for, based on the system information, evaluating, based on at least one measurement performed in a first state, whether the at least one condition is satisfied; and means for, based on determining that the at least one condition is satisfied, applying the measurement offloading based on a state transition from the first state to a second state.
**Clause 22.** A non-transitory computer-readable medium comprising program instructions that, when executed by an apparatus, cause the apparatus to perform at least the method of Clause 20.

## Claims

1. An apparatus comprising:
means for storing system information comprising at least one condition for applying measurement offloading from a first type of radio to a second type of radio;
means for based on the system information, evaluating, based on at least one measurement performed in a first state, whether the at least one condition is satisfied; and
means for based on determining that the at least one condition is satisfied, applying the measurement offloading based on a state transition from the first state to a second state.

2. The apparatus of claim 1, wherein the first state comprises a connected state, and the second state comprises one of an idle state or an inactive state.

3. The apparatus of claim 1, wherein the first state comprises one of an idle state or an inactive state, and the second state comprises a connected state.

4. The apparatus of any of claims 1-3, wherein one of the following:
the first type of radio comprises a main radio (MR), and the second type of radio comprises a low-power wake-up receiver (LP-WUR); or
the first type of radio comprises a LP-WUR, and the second type of radio comprises a MR.

5. The apparatus of any of claims 1-4, wherein the means for storing the system information comprises means for storing the system information in the first state.

6. The apparatus of any of claims 1-5, further comprises:
means for maintaining the system information from the second state to the first state.

7. The apparatus of any of claims 1-6, wherein the means for evaluating whether the at least one condition is satisfied comprises:
means for comparing the at least one measurement with the at least one condition.

8. The apparatus of any of claims 1-7, wherein the means for evaluating whether the at least one condition is satisfied comprises at least one of the following:
means for determining whether the at least one condition is satisfied upon transitioning from a connected state to an idle or inactive state or transitioning from an idle or inactive state to a connected state; or
means for determining whether the at least one condition is satisfied in the first state.

9. The apparatus of any of claims 1-8, wherein the means for applying the measurement offloading comprises at least one of the following:
means for applying the measurement offloading upon receiving an RRC message from a network device for the apparatus to transition from a connected state to an idle or inactive state;
means for applying the measurement offloading upon receiving an RRC message from a network device for the apparatus to transition from an idle or inactive state to a connected state;
means for applying the measurement offloading upon receiving a first indication on which cell to start performing the at least one measurement by the second type of radio; or
means for applying the measurement offloading upon a state transition initiated by the apparatus.

10. The apparatus of any of claims 1-9, wherein the at least one condition is at least one first condition, and the apparatus further comprises:
means for evaluating, based on at least one measurement performed in the first state, whether at least one second condition for activating the second type of radio is satisfied; and
means for activating the second type of radio based on determining that the at least one second condition is satisfied.

11. The apparatus of claim 10, wherein the means for evaluating whether the at least one second condition is satisfied comprises:
means for determining whether a first power for the second type of radio to perform the at least one measurement is below a first threshold; and
means for determining whether a second power for the second type of radio and the first type of radio to perform the at least one measurement is below a second threshold.

12. The apparatus of claim 10 or 11, wherein the means for activating the second type of radio comprises:
means for activating the second type of radio based on determining that the first power is below the first threshold and the second power is below the second threshold.

13. The apparatus of any of claims 10-12, wherein at least one of the first threshold or the second threshold is predefined or stored by the apparatus or configured by a network device.

14. A method comprising:
storing system information comprising at least one condition for applying measurement offloading from a first type of radio to a second type of radio;
based on the system information, evaluating, based on at least one measurement performed in a first state, whether the at least one condition is satisfied; and
based on determining that the at least one condition is satisfied, applying the measurement offloading based on a state transition from the first state to a second state.

15. A non-transitory computer readable medium comprising program instructions that, when executed by an apparatus, cause the apparatus to perform at least the method of claim 14.
